# EUROPEAN PATENT SPECIFICATION

(11) **EP 0 789 851 B1**
(45) Date of publication and mention of the grant of the patent: **03.04.2002**
(21) Application number: 95928809.3
(22) Date of filing: 02.08.1995
(51) Int. Cl.: G02B 5/128, G02B 5/124

(54) **RETROREFLECTIVE ARTICLE THAT HAS PHENOLIC RESIN IN CHEMICAL ASSOCIATION WITH REFLECTIVE ALUMINUM LAYER**
RETROREFLEKTIERENDER ARTIKEL MIT PHENOLHASZ IN CHEMISCHER VERBINDUNG MIT EINER ALUMINIUMSCHICHT
ARTICLE REFLECHISSANT RENFERMANT UNE RESINE PHENOLIQUE EN ASSOCIATION CHIMIQUE AVEC UNE COUCHE REFLECHISSANTE D'ALUMINIUM

(30) Priority: 16.09.1994 US 308073
(43) Date of publication of application: 20.08.1997
(73) Proprietor: MINNESOTA MINING AND MANUFACTURING COMPANY, St. Paul, Minnesota 55133-3427 (US)
(72) Inventor: KETOLA, Warren, D., Saint Paul, MN 55133-3427 (US); DANIELS, Michael, P., Saint Paul, MN 55133-3427 (US); PAVELKA, Lee, A., Saint Paul, MN 55133-3427 (US)
(74) Representative: VOSSIUS & PARTNER
(86) International application number: US9510181
(87) International publication number: WO9608737

(56) References cited:
- DE-A- 1 446 828
- US-A- 4 231 830
- US-A- 4 248 748
- US-A- 4 533 592
- US-A- 5 200 262
- US-A- 5 283 101

## Description

The present invention pertains to encapsulated lens retroreflective sheeting that employs a layer of aluminum as a retroreflector and that has a phenolic resin in chemical association with the aluminum layer.

Retroreflective articles have the ability to return a substantial portion of incident light in the direction from which the light originated. This unique ability has promoted widespread use of retroreflective articles on signs and markers along roadways. The articles display information to motor vehicle drivers at nighttime by retroreflecting light from the headlamps of motor vehicles.

Retroreflective articles typically are in the form of a sheeting, and there are two major categories of retroreflective sheeting. The first category often is referred to as "beaded lens sheeting". In beaded lens sheeting, a monolayer of beads (also referred to as lenses, lens elements, and microspheres) is employed as optical elements that collimate light so that the reflected light is returned in a direction substantially parallel to the direction from which the light entered the sheeting. One configuration of beaded lens sheeting is "exposed lens" sheeting in which the lens elements are exposed to the ambient environment. Another configuration is an "enclosed lens" sheeting such as disclosed in U.S. Patent 2,407,680 to Palmquist, where the lens elements are covered by a flat transparent cover film. In another configuration, sometimes referred to as "encapsulated lens" sheeting, the lens elements are encapsulated in the form of a multitude of hermetically-sealed air chambers; see for example, U.S. Patents 3,190,178, 4,025,159, 4,896,943, 5,064,272, and 5,066,098 see also US 4 231 830, in which the encapsulated lens retroreflective sheeting comprises a reflective layer of aluminium behind the lens elements. In all of the embodiments of beaded lens sheeting, the monolayer of lens elements is embedded in a supporting surface which is commonly referred to as a binder layer.

The second major category of retroreflective sheeting is referred to as cube-comer sheeting. Examples of cube-corner sheeting are shown in U.S. Patents 3,684,348, 4,801,193, 4,895,428, and 4,938,563. In cube-corner sheeting, a multitude of cube-corner elements, each having a shape resembling the corner of a room, project from a body portion (also known as a land). The multitude of cube-comer elements act as the optical elements which collimate light so that the reflected light is directed out of the sheeting in a direction substantially parallel to the direction from which the light entered the sheeting. Light which enters the front of the cube-corner sheeting passes through the body portion, strikes the backside of the cubes, and is reflected to pass through the body portion of the sheeting in the direction of the light source.

In both of the major categories of retroreflective sheetings, a metal layer often is disposed behind the optical elements as a reflector. Aluminum frequently is the metal of choice for use in the metal layer. The aluminum layer together with the optical elements comprise the retroreflective constituent of the sheeting. The sheetings that use lenses as the optical elements typically have the aluminum layer located on the embedded surfaces of the lenses. In the cube-comer sheetings, the aluminum layer typically is disposed on the back side of the cube-corner elements. In known retroreflective sheetings, the aluminum in the metal layer often becomes oxidized. Oxidized aluminum transmits light, whereas elemental aluminum reflects light. Thus, extensive oxidation of the aluminum in the reflective layer can lead to loss of retroreflectivity.

In U. S. Patent 4,248,748 to McGrath and Johnson, a heat-activated adhesive is disclosed that contains an acrylate polymer and a tackifying resin. In addition to these ingredients, it is disclosed that the adhesive may contain other materials such as phenolic resins to control pre-adhesion and to strengthen the heat-activated bond. No disclosure is provided in regard to the phenolic content of the phenolic resin. In examples 8-15 of the patent, a "a low-reactivity phenolic resin" Super Beckacite™, Reichhold Chemicals Inc., was added to the heat-activated adhesive. It is believed that this phenolic resin has a total hydroxyl number of about 470. The patent discloses that the heat-activated adhesive can be used on a retroreflective sheeting.

Phenolic resin adhesives have been used in the aircraft industry and are known to be stable in hot wet climates. *See* Poole, P. *Adhesion Problems in the Aircraft Industry*, ch. 9 of Industrial Adhesion Problems, edited by D. Brewis and D. Briggs, Wiley Interscience, New York (1985). Modified epoxy-phenolic primers containing corrosion inhibitors have been shown to improve durability of aluminum structural adhesive joints. *Id*. U.K. patent application GB 2,165,165-A describes a process for coating aluminum to provide corrosion resistance and an increase adhesion of paints. The coating process involves use of a polyphenolic compound or its acidic salt. In Matienzo, L.J., et al., *J*. *of Materials Sci*., v. 21, pp. 1601-1608 (1986), it has been reported that organophosphonates and organosilanes protect aluminum from environmental corrosion.

The present invention provides an encapsulated lens retroreflective sheeting, which comprises:
a retroreflective constituent (12) that includes optical elements (14) and a reflective layer (16) that contains elemental aluminium, the reflective layer (16) that contains elemental aluminium being disposed behind the optical elements (14); characterized in that the sheeting also comprises a phenolic resin which interacts with the elemental aluminium to hinder its oxidation, the phenolic resin having a total hydroxyl number at least 90, wherein "total hydroxyl number" means the sum of the hydroxyl number and the acid number, which are respectively determined in accordance with two standardized tests, the first test determining the hydroxyl number according to the Test Method A of ASTM E 222-88 and the second test determining the acid number according to the potentiometric method of ASTM D 465-92, with the proviso that if the retroreflective sheeting (10) possesses an adhesive layer (20) for mounting the sheeting to a substrate, the phenolic resin is incorporated in the adhesive layer (20) at less than 25 percent by weigh.

The present invention differs from known retroreflective articles in that a phenolic resin having a total hydroxyl number of at least 90 is placed in chemical association with the elemental aluminum in the reflective layer. The term "total hydroxyl number" means the sum of the hydroxyl number and the acid number, which are determined in accordance with two standardized tests. The first standardized test determines the hydroxyl number and is ASTM E 222-88, where Test Method A (Pressure Bottle Method) is employed. The second standardized test determines the acid number and is ASTM D 465-92, where the potentiometric method is used. The term "chemical association" means the phenolic resin interacts with the elemental aluminum to hinder its oxidation.

It has been discovered in this invention that when the phenolic resin is placed in chemical association with the reflective layer, the durability of the retroreflective sheeting is improved. The sheeting is able to retain much of its initial retroreflectance for an extended time period. When the phenolic resin is in direct contact with the elemental aluminum, the phenolic resin can prevent oxidation of the aluminum in the reflective layer. When other layers are disposed therebetween, it still can be possible in some embodiments for the phenolic resin to chemically associate with the aluminum in the reflective layer. In addition to placing a damper on the oxidation of the aluminum in the reflective layer, it also has been discovered in this invention that the phenolic resin makes an encapsulated retroreflective sheeting more resistant to delamination. This is very important because delamination disrupts sheeting optics and allows direct attack by the elements of weather -- including sunlight, moisture, dirt, and mildew -- on the internal components of the sheeting, particularly around the sheeting's edges. The durable retroreflective sheeting of this invention allows good retroreflective performance to be maintained for an extraordinary duration, reducing the need to monitor and replace the sheeting as often.

In the drawings:
FIG. 1 is a cross-section of an example of a beaded lens retroreflective sheeting **10** in accordance with the present invention;
FIG. 2 is a top view of the beaded lens retroreflective sheeting **10** of FIG. 1;

These drawings are idealized and are not drawn to scale.

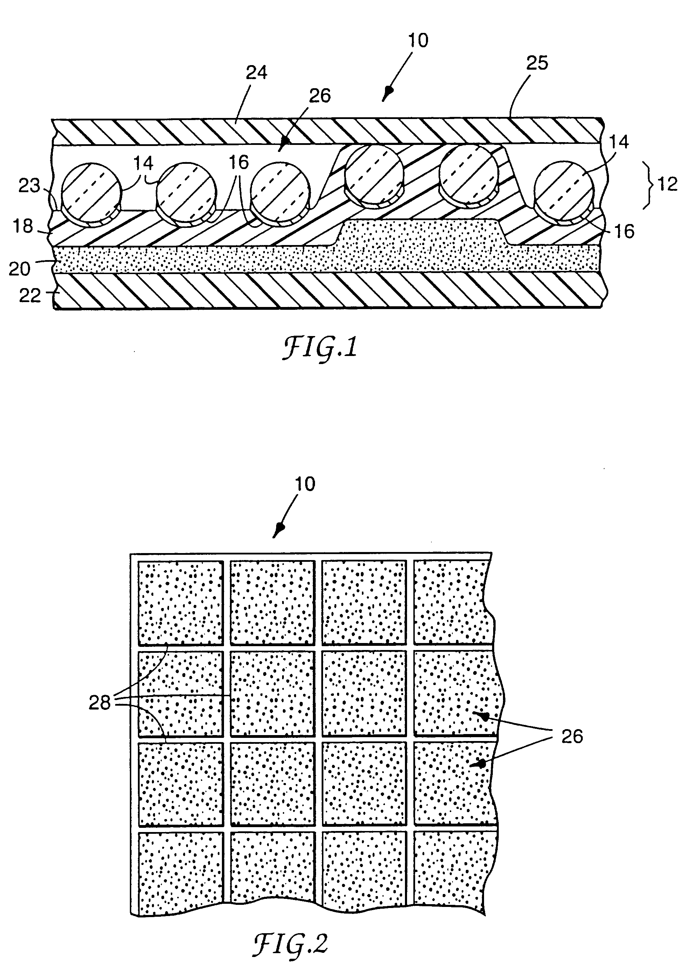

In the practice of the present invention, a retroreflective sheeting is provided that has longer lasting retroreflective performance and improved resistance to delamination. FIG. 1 illustrates an example of a beaded lens retroreflective sheeting **10** in which the lens elements **14** are encapsulated. Retroreflective sheeting **10** comprises a retroreflective constituent **12** that includes a monolayer of lens elements **14** and a reflective layer **16** that contains elemental aluminum. Retroreflective constituent **12** is embedded in a binder layer **18**. Located behind binder layer **18** is an adhesive layer **20**. A release liner **22** is placed over the adhesive layer **20** to protect the same until sheeting **10** is adhered to a substrate (not shown).

In chemical association with the reflective layer **16** is a phenolic resin that has a total hydroxyl number of at least about 90. The phenolic resin may be present, for example, in the binder layer **18**, the adhesive layer **20**, on the front or first major surface **23** of binder layer **18**, or it may be present on the substrate to which the retroreflective sheeting becomes secured.

On the front or first side **25** of the retroreflective sheeting **10,** a cover layer **24** can be secured to the retroreflective constituent **12** along a network of lines to form an encapsulated lens retroreflective sheeting; see, for example, U.S. Patent 3,190,178 to McKenzie. This forms a multitude of hermetically sealed cells **26** within which the lens elements **14** are encapsulated and have an air interface. As shown from a front view in FIG. 2, retroreflective sheeting **10** can have a multitude of hermetically sealed air chambers **26** bounded by a network of bond lines **28**. FIGs. 1 and 2 illustrate an encapsulated retroreflective sheeting according to the invention. The teaching of this disclosure may be used in connection with the other beaded lens sheetings such as the enclosed lens and exposed lens constructions; see, for example, U.S. Patents 2,407,680; 4,968,063; 5,060,981; 5,080,463; 5,128,804; 5,200,262; and 5,283,101.

The lens elements **14** supported by the binder layer **18** are capable of altering the direction of light so that, in conjunction with aluminum-containing reflective layer **16**, incoming light can be retroreflected. As shown, the lens elements **14** can be microspheres which, preferably, are substantially spherical in shape in order to provide the most uniform and efficient retroreflection. The microspheres preferably also are substantially transparent so as to minimize absorption of light so that a large percentage of the incident light is retroreflected. The microspheres often are substantially colorless but may be tinted or colored in some other fashion. The microspheres may be made from glass, a non-vitreous ceramic composition, or a synthetic resin. In general, glass microspheres are preferred because they tend to be less expensive, harder, and more durable than microspheres made from synthetic resin. Examples of microspheres that may be useful in this invention are disclosed in the following United States patents: 1,175,224, 2,461,011, 2,726,161, 2,842,446, 2,853,393, 2,870,030, 2,939,797, 2,965,921, 2,992,122, 3,149,016, 3,468,681, 3,946,130, 4,192,576, 4,367,919, 4,564,556, 4,758,469, 4,772,511, and 4,931,414.

Microspheres used in the present invention typically have an average diameter in the range of about 30 to 200 microns. Microspheres used in the present invention typically have a refractive index of about 1.7 to 2.3. The average diameter and refractive index of the microspheres may vary depending on whether the microspheres are encapsulated, enclosed, or exposed; see U.S. Patent 4,957,335 to Kuney, Jr.,.

The reflective layer **16** that contains elemental aluminum is disposed behind the layer of lens elements **14** such that the reflective layer **16** is capable of reflecting incident light that passes through the lens elements **14** from the front side **25** of the sheeting **10**. In many embodiments, it is preferred that the reflective layer is disposed directly on the embedded portion of the lens elements. The reflective layer contains an effective amount of elemental aluminum. It is to be understood, however, that some of the aluminum may be in the form of metal oxide and/or hydroxide. The reflective layer that contains elemental aluminum can specularly reflect light and typically has a thickness of about 50 to 100 nanometers. The reflective layer may be produced by known techniques, including vacuum deposition, vapor coating, chemical deposition, or electroless plating processes.

The binder layer, onto which the retroreflective constituent is supported, typically is a flexible polymeric material. A number of polymers may be used as a binder layer in a beaded lens sheeting. Examples of some of the polymers include: polyolefins, polyesters, polyurethanes, polyepoxides, natural and synthetic rubbers, acrylic resins, and combinations thereof. The binder layer typically is a continuous fluid-impermeable, sheet-like layer but may be a fibrous structure, for example, as taught in U.S. Patent 5,128,804. In general, the binder layer has a thickness of about 1 to 250 micrometers. Typically, the thickness is about 25 to 75 micrometers. Thicknesses less than 25 micrometers may be too thin to adhere to both the substrate and the optical elements, and thicknesses greater than 75 micrometers may unnecessarily stiffen the sheeting and add to its cost. The binder layer also may contain other operational additives as are well-known in the art. Examples of operational additives include colorants (for example, pigments and dyes), stabilizers (for example, thermal and hydrolytic stabilizers and antioxidants), hindered amines, flame retardants, flow modifiers (for example, surfactants), viscosity adjusters (for example, organic solvents), rheology modifiers (for example, thickeners), coalescing agents, plasticizers, tackifiers, et cetera. Generally, the binder layer contains about 70 percent by weight up to about 100 percent by weight of polymeric material, with the remainder being operational additives in effective amounts.

The adhesive layer preferably is a pressure-sensitive adhesive (PSA). As the term is used herein, "pressure sensitive adhesive" or "PSA" means an adhesive that, in a dry state, is relatively permanently tacky at room temperature to allow adherence to a variety of surfaces upon mere contact with slight hand pressure. Normally tacky PSA material has contained crude rubber and rosin or various hydrocarbon resins. The blend employed provides the four-fold balance of adhesion, cohesion, stretchiness, and elasticity. Certain vinyl polymers such as poly-n-butyl acrylate and polyvinyl n-butyl ether have provided the four-fold balance of properties in the absence of tackifying resins and other modifying agents. Examples of other vinyl polymers having inherent PSA properties are polymers of acrylate esters of acrylic acid with non-tertiary alkyl alcohols. Particularly preferred PSAs are copolymers consisting essentially of acrylic acid esters of non-tertiary alkyl alcohols having one to 14 carbon atoms and acrylic monomers of acrylic acid, methacrylic acid, itaconic acid, acrylamide, methacrylamide, acrylonitrile, and methacrylonitrile; see U.S. Patent Re 24,906 to Ulrich. The amounts of the monomers and proportions thereof being selected to provide a normally tacky and pressure-sensitive adhesive copolymer.

The cover film preferably is highly transparent (that is, it has a high transmittance of visible light) to minimize loss of retroreflectivity from absorption or scattering of light. Typically, the cover films used in an encapsulated or an enclosed lens sheeting has a visible light transmittance of at least 75 percent and preferably at least 85 percent. Cover films may comprise polyethylene, polypropylene, or a copolymer comprising major portions of ethylene and propylene as disclosed in U.S. Patents 4,896,943, 4,897,136, and 5,064,272. Acrylic resins such as polymethyl methacrylate also may be used as cover films and can provide good durability and high transparency; see U.S. Patent 4,025,159 to McGrath.

In accordance with the present invention a phenolic resin is placed in chemical association with reflective layer that contains elemental aluminum. The term "phenolic resin" is used herein to mean an oligomeric or polymeric material containing units that have an aromatic nucleus that is substituted with one or more hydroxyl groups. The aromatic nucleus may be monocyclic or polycyclic and can be carbocyclic or heterocyclic. Typically, the aromatic nucleus is a six-membered carbocylic ring but may be, for example, a five-, nine-, or ten-membered heterocyclic ring, or a ten-membered carbocyclic ring. The aromatic nucleus typically contains 10 or less atoms in the ring(s) structure of the aromatic nucleus. The phenolic resin may be a resole or novalac type phenolic resin. Preferred phenolic resins used in the invention are the reaction products of an aldehyde and a phenol. The aldehyde may be, for example, formaldehyde, acetaldehyde, furaldehyde, and the like, and combinations thereof. In lieu of an aldehyde, a terpene such as α-pinene or β-pinene, or pimaric acid, may be reacted with a phenol. Examples of phenols that may be reacted with the aldehydes to form a phenolic resin include: phenol; alkyl-substituted phenols such as p-tert butylphenol, p-octylphenol, p-nonylphenol, methylphenol and 2,3-xylenol; 1,3-benezenediol, 4,4'isopropylidenediphenyl (2,2-bis(4-hydroxylphenyl) propane; bisphenol-A). A preferred phenolic resin includes the reaction product(s) of formaldehyde with one or more of phenol, p-tert butyl phenol, p-octyl phenol, p-nonylphenol, and 1,3 benzenediol. The phenolic resin preferably has a total hydroxyl number of 90 to 1100, more preferably 100 to 500.

Examples of suitable commercially available phenolic resins include: Varcum™ resins 29-008, 29-446, 29-445, and 29-401 from Occidental Chemical Corp., North Tonawanda, New York; CK 1634, CK 2400, CK 2500, and CK 2432 from Georgia Pacific Resins, Inc., Tacoma, Washington; Vinsol™ ester gum from Hercules Incorporated, Wilmington, Delaware.

Although it is possible to incorporate the phenolic resin into essentially any portion of the encapsulated lens retroreflective sheeting which allows the phenolic resin to chemically associate with the metal in the reflective layer, it is preferred that the phenolic resin be disposed in direct contact with the reflective layer or be disposed in a layer that is in direct contact with the reflective layer. In this regard, the phenolic resin preferably is disposed in the binder layer of a beaded-lens sheeting. The phenolic resin also may be incorporated into the adhesive layer of a beaded lens sheeting when the binder layer permits the phenolic resin to chemically associate with the aluminum metal in the reflective layer. When the phenolic resin is incorporated into the binder layer of a beaded-lens sheeting, the phenolic resin preferably is disposed therein at about 0.5 to 25 weight percent, more preferably at about 1 to 10 weight percent. When the phenolic resin is incorporated into the adhesive layer of a beaded-lens sheeting, the phenolic resin preferably is disposed therein at about 1 to 25 weight percent, more preferably at about 5 to 20 weight percent. The phenolic resin also may be placed on a surface onto which the retroreflective sheeting becomes secured. As illustrated above, when the phenolic resin is disposed in a layer that is in direct contact with the reflective layer, the phenolic resin preferably is disposed therein at about 1 to 10 weight percent, whereas if the phenolic resin disposed in a layer that is spaced from the reflective layer, then the content of the phenolic resin preferably is increased to about 5 to 20 weight percent.

Features and advantages of this invention are further illustrated in the following examples. It is to be expressly understood, however, that while the examples serve this purpose, the particular ingredients and amounts used as well as other conditions and details are not to be construed in a manner that would unduly limit the scope of this invention.

### Examples 1-3

Superbeckacite™ 1003, a resole phenolic resin with a total hydroxyl number of about 476 -- previously available from Reichold Chemical Company, now available from Occidental Chemical Corporation as Varcum™ 29446 -- was dissolved in methyl ethyl ketone (MEK) to prepare a 50% (w/w) solution. Vinsol™ ester gum, a phenolic resin with a total hydroxyl number of about 186 was dissolved in MEK to prepare a separate 50% (w/w) solution. To separate 100 gram portions of a solution -- for a terpolymer PSA containing 57.5 weight percent iso-octylacrylate, 35 weight percent methyl acrylate, 7 weight percent acrylic acid (27 weight percent in 50/50 ethyl acetate/toluene)) -- were added 5 grams of the Superbeckacite™ 1003/MEK or Vinsol Ester Gum/MEK solution. A separate 100 gram portion of the isooctylacrylate/methyl acrylate/acrylic acid terpolymer without any added phenolic resin also was prepared. A knife coater with an orifice set to give a dry film thickness of 0.254 mm (1 mil) was used to coat these phenolic resin/psa solutions onto a release liner. After coating, the adhesives were dried in an oven for 10 minutes at 200 °F to remove solvent. The adhesive films then were applied to the backside of the binder layer (support layer) of an encapsulated lens retroreflective sheeting prepared according to example 12 of U.S. patent 4,025,159. After removing the release liner, the adhesive coated retroreflective sheeting specimens were applied to aluminum panels (5052 H33 alloy, with an Alodine™ 1200 chromate conversion coating (Parker-Amchem, Madison Heights, Michigan). Retroreflectance was measured on each sample in accordance with ASTM E 810-91 using a -4° entrance angle and a 0.2° observation angle. The samples were directly exposed outdoors to sunlight and other elements at an angle of 45° to the horizontal in Miami, Florida according to ASTM G 7-89. Further reference to "ASTM E-810-91" herein means ASTM E 810-91 wherein the entrance angle, observation angle, outdoor exposure are as just described. Table 1 shows the retroreflective retention results after 78 months of outdoor exposure in Miami, Florida.

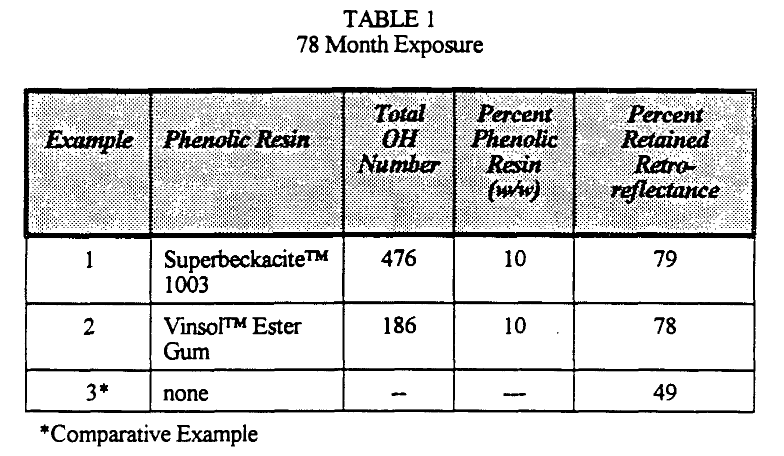

The data in Table 1 demonstrate that samples of the invention (Examples 1 and 2) showed dramatically better retention of retroreflectance, as compared to a sample (Example 3) that contained no phenolic resin. Although the data is not presented in Table 1, Examples 1 and 2 also showed no lifting of the top film at the test panel edges, while the sample of Example 3 had noticeable lifting of top film at the test panel edges.

### Examples 4-6

The procedures of Examples 1-3 were followed to prepare retroreflective sheeting samples using an 94% isooctylacrylate/6% acrylic acid PSA (36% w/w solution polymer in ethyl acetate) tackified with Foral™ 85, a hydrogenated rosin ester having a total OH number of about 60, (available from Reichold Chemicals), a terpene phenolic having a total OH number of about 70-80, (Nirez™ 2019 from Reichold Chemicals), or a resole phenolic resin (Superbeckacite™ 1003 from Reichold Chemicals) having a total OH number of about 476. After preparing the retroreflective sheeting specimens, retroreflectance was measured according to ASTM E 810-91 after being exposed outdoors in Miami, Florida for 48 months. Results of the tests are set forth below in Table 2.

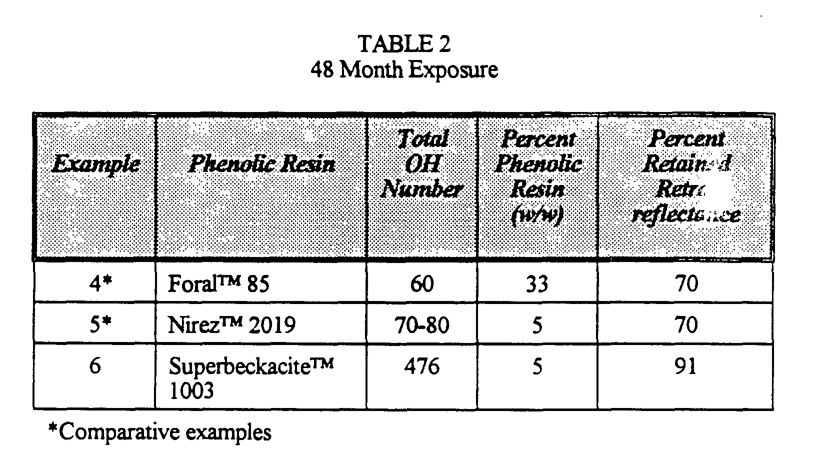

The data in Table 2 demonstrate that the sample of the invention has improved durability to long-term exposures to sunlight.

### Examples 7-8

The procedures of Examples 1-3 were followed to prepare and test retroreflective sheeting specimens except a PSA was used that contained ninety-five weight percent of a copolymer comprising 90 weight percent 2-methylbutylacrylate, 10 weight percent acrylic acid, and 5 weight percent Superbeckacite™ 1003. Table 3 shows the retained retroreflectance after 12 months of outdoor exposure in Miami, Florida.

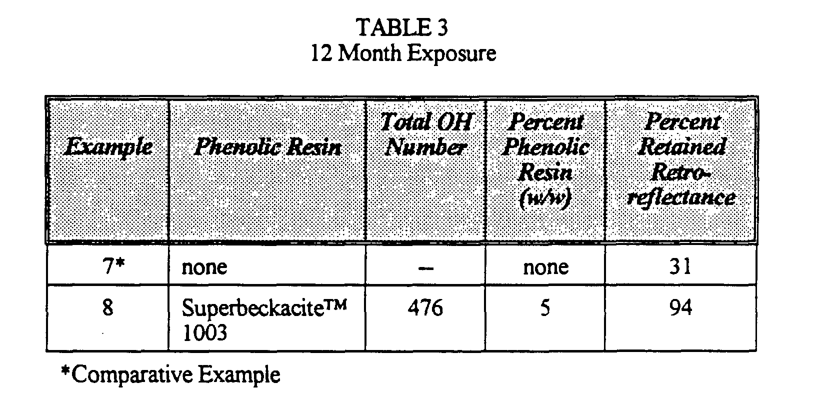

The data in Table 3 show how samples of the invention demonstrate substantially improved durability when containing relatively low amounts of phenolic resin in chemical association with the adhesive layer.

### Examples 9-16

These Examples illustrate how treatment of a sign substrate with a dilute solution of a phenolic resin will enhance the durability of retroreflective sheetings. Each resin evaluated was dissolved in methyl ethyl ketone (5% w/w). Aluminum panels (5052H33 alloy) -- treated either with an Alodine™ 1200 chromate conversion coat, or with an etch and desmut surface created by caustic etch and a dilute nitric acid wash -- were then dipped for 10 seconds in the dilute MEK/resin solution, air dried for approximately 10 minutes, and dried in an oven for 10 minutes at 150°F. Reichold 24-003 is believed to be the same as Superbeckacite™ 1003, Reichold 29-008 (now believed to be Varcum™ 29008) is a non-heat reactive novolac phenolic resin, and Reichold 29-402 (now believed to be Varcum™ 921) and Reichold 29-503 (now believed to be Varcum™ 1198) are heat reactive alkyl phenolic resins. The aluminum panels were allowed to cool before applying Scotchlite™ 3870 High Intensity Grade Sheeting, 3M Company, St. Paul, Minnesota. After the Scotchlite™ 3870 High Intensity Retroreflective Sheeting was applied to the aluminum panels, retroreflectance was measured according to ASTM E 810-91 according to the conditions described above. The test results are shown in Table 4.

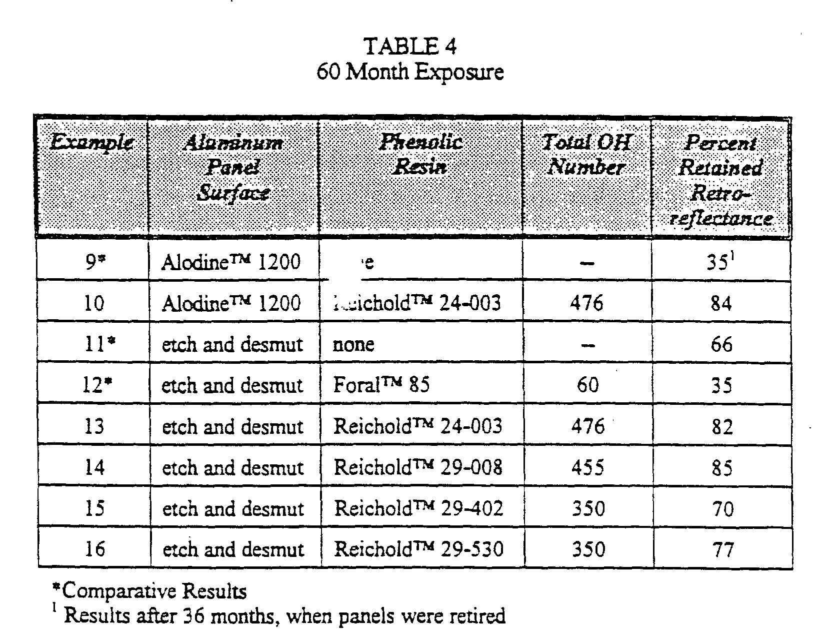

The data in Table 4 shows the percent retained retroreflectance from 10 measurements (two replicate specimens, five measurements each) after 60 months of exposure in Miami, Florida at 45° to the horizontal. In addition to showing higher retained retroreflectance, test specimens using the phenolic resins (Examples 10, 13-16) showed less lifting of the top film at panel edges than the test specimens using no phenolic resin (Examples 9 and 11) or with a resin having a low total hydroxyl number (Example 12).

### Examples 17-21

Examples 17-21 show how phenolic resins can provide enhanced durability relative to that obtained when other glassy polymers such as poly-alphamethyl styrene (Kristalex™ 3085, available from Hercules Chemical Inc.) or a coumarone-indene resin (Cumar™ R-13, available from Neville Chemical Co., Pittsburgh, Pennsylvania) are employed. Union Carbide CK1634 is believed to be a heat reactive resole phenolic resin now available from Georgia Pacific. The procedure described in Examples 9-17 was used to treat 5052H33 aluminum panels that had an etch and desmut surface. Scotchlite™ 3870 High Intensity Grade retroreflective sheeting was applied to each panel after they had been treated, dried, and allowed to cool. Retroreflectance was tested as described above. Each sample was visually observed for adherence of the top film to the remainder of the retroreflective structure. The portion of the top film that remained well adhered to the sheeting was determined by measuring the area of top film remaining attached and expressing it as a percent of the total applied to the test panel. The results are set forth in Table 5.

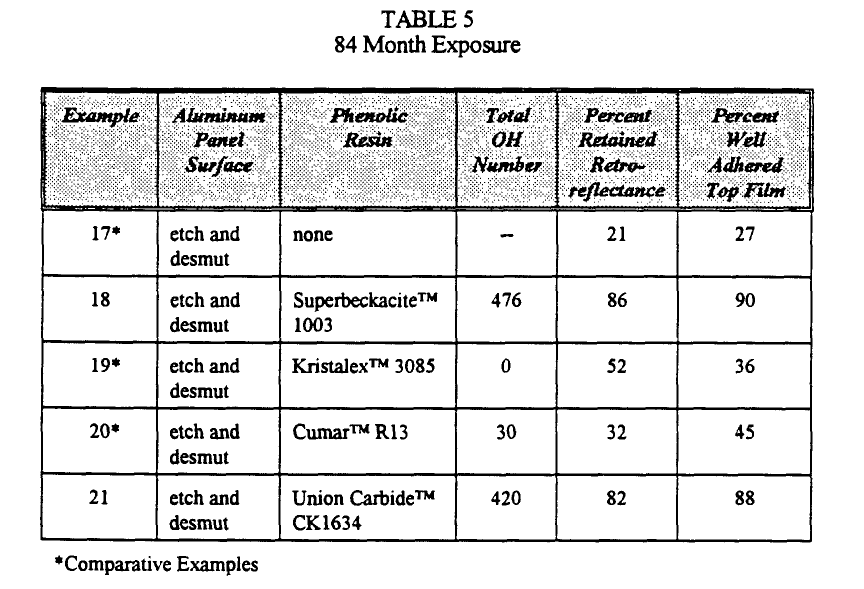

Table 5 shows the percent retained retroreflectance from 6 measurements (two replicate test panels, three measurements per panel) after 84 months exposure in Miami, Florida at 45°. The samples of the invention, examples 18 and 21 demonstrated improved retained retroreflectance and also showed significantly less lifting of the top film at panel edges when compared to Examples 17, 19, and 20.

### Examples 22-24

Examples 22-24 were prepared and tested using the procedure described in Examples 9-16 and illustrate that durability can be enhanced when the substrate onto which the retroreflective sheeting is mounted is first treated with a solution containing a phenolic resin (5% w/w - Example 23; 1% w/w - Example 24). Scotchlite™ 3870 High Intensity Grade retroreflective sheeting was applied to aluminum panels after they had been treated, dried, and allowed to cool.

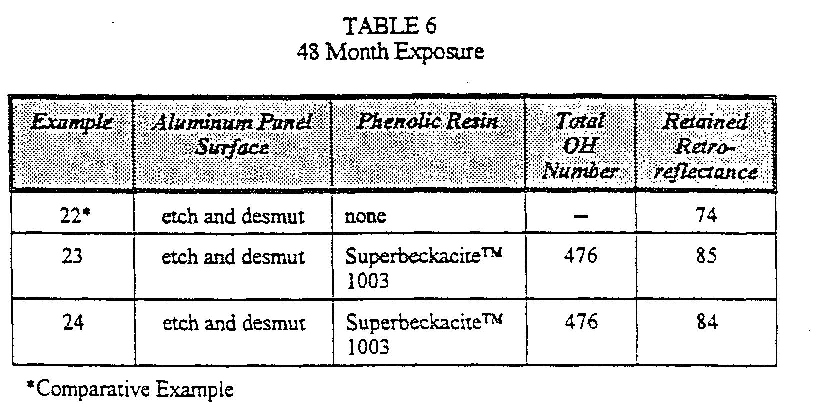

The data in Table 6 shows that samples of the invention demonstrated superior retroreflectance after being exposed to the sun and other elements for 48 months. Further, Examples 23 and 24 also showed significantly less lifting of the top film at test panel edges when compared to Example 22, which used no phenolic resin.

### Examples 25-29

Examples 26-29 show how adding small amounts of phenolic resin to the binder layer of a retroreflective sheeting can enhance durability. The procedures described in Example 12 of U.S. 4,025,159 were followed to prepare an encapsulated lens retroreflective sheeting. Small amounts (1% w/w) of several resins were added to the xylene solution of a methylmethacrylate/ethyl acrylate/iso-octylacrylate terpolymer, DuPont™ TiPure™ R960, Titanium Dioxide, and tetra-ethyleneglycol diacrylate. After the sheeting samples were prepared, they were coated with a 90/10 2-methylbutyl acrylate/acrylic acid which contained 5% (w/w) Emery Plastolein™ 9754U plasticizer previously available from Emery Corporation (now believed to be available from Henkel Corporation, Gulph Mills or Ambler, Pennsylvania, or Cincinnati, Ohio). Nirez™ 5120 is a terpene resin formerly available from Reichold Chemical. Table 7 shows the retention of retroreflectance and appearance observations for Examples 25-29 after being exposed outdoors for 24 months in Miami, Florida and being tested in accordance with ASTM E 810-91.

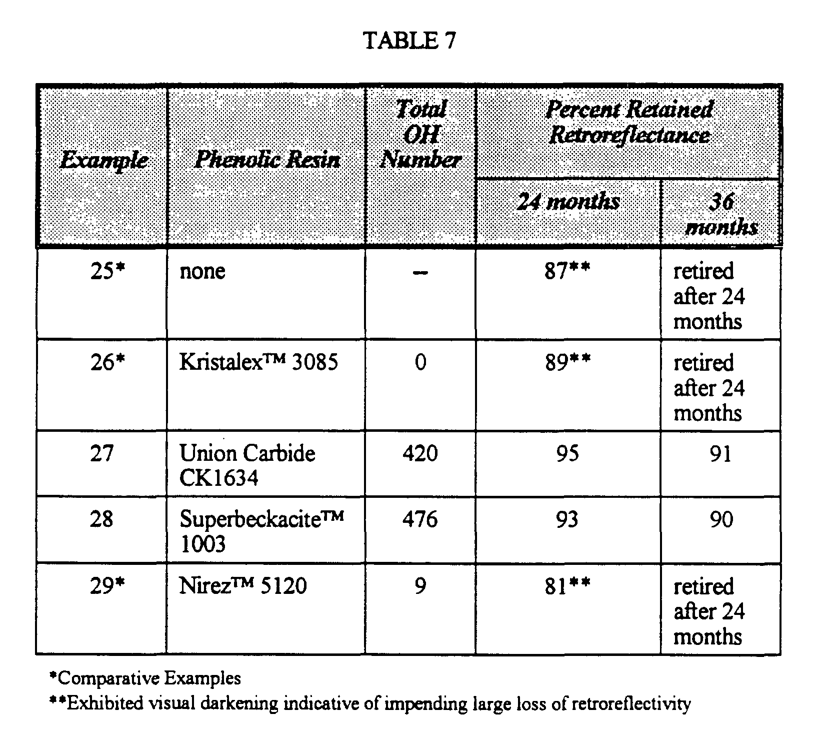

The data in Table 7 demonstrate that non-phenolic tackifiers show little or no improvement in durability as compared to the control sample (Example 25); whereas, the inventive samples demonstrated improved durability as shown by the higher percent retained retroreflectance values.

This invention may take on various modifications and alterations without departing from the scope thereof. Accordingly, it is to be understood that this invention is not to be limited to the above-described, but is to be controlled by the limitations set forth in the following claims. It is also to be understood that this invention may be suitably practiced in the absence of any element not specifically disclosed herein.

## Claims

1. An encapsulated lens retroreflective sheeting (10) that comprises:
a retroreflective constituent (12) that includes optical elements (14) and a reflective layer (16) that contains elemental aluminium, the reflective layer (16) that contains elemental aluminium being disposed behind the optical elements (14); **characterized in that** the sheeting also comprises a phenolic resin which interacts with the elemental aluminium to hinder its oxidation, the phenolic resin having a total hydroxyl number of at least 90, wherein "total hydroxyl number" means the sum of the hydroxyl number and the acid number, which are respectively determined in accordance with two standardized tests, the first test determining the hydroxyl number according to the Test Method A of ASTM E 222-88 and the second test determining the acid number according to the potentiometric method of ASTM D 465-92; with the proviso that if the retroreflective sheeting (10) possesses an adhesive layer (20) for mounting the sheeting to a substrate, the phenolic resin is incorporated in the adhesive layer (20) at less than 25 percent by weight.

2. The retroreflective sheeting of claim 1, further comprising a layer of pressure-sensitive adhesive for mounting the retroreflective sheeting on a substrate the pressure-sensitive adhesive containing 0.5 to 25 weight percent of the phenolic resin.

3. The retroreflective sheeting of claim 2, wherein the pressure-sensitive adhesive consists essentially of 1) acrylic esters of non-tertiary alkyl alcohols having I to 14 carbon atoms, and 2) at least one monomer copolymerizable with the acrylic acid ester and selected from acrylic acid, methacrylic acid, itaconic acid, acrylamide, methacrylamide, acrylonitrile, and methacrylonitrile.

4. The retroreflective sheeting of claims 1-3, wherein the phenolic resin includes the reaction products of an aldehyde and a phenol.

5. The retroreflective sheeting of claim 4, wherein the aldehyde is selected from the group consisting of formaldehyde, acetaldehyde, anisaldehyde, cinnamaldehyde, furaldehyde, proprionaldehyde, oxalaldehyde, and salicylaldehyde and combinations thereof and the phenol is selected from phenol, p-tert butylphenol, p-tert octylphenol, p-nonylphenol, methylphenol, 1,3-benezenediol, 4,4'-isopropylidenediphenyl, and 2,3-xylenol, and combinations thereof.

6. The retroreflective sheeting of claims 1-5, wherein the phenolic resin is the reaction product of formaldehyde and one or more of the following: phenol, p-tert butylphenol, p-tert octylphenol, p-nonylphenol, and 1,3-benezenediol.

7. The retroreflective sheeting of claims 1-6, wherein the phenolic resin has a total hydroxyl number of 90 to 1,100.

8. The retroreflective sheeting of claims 1-7, wherein the phenolic resin has a total hydroxyl number of 100 to 500.

9. The retroreflective sheeting of claims 1-8, wherein the retroreflective sheeting is a beaded lens sheeting, and the phenolic resin is disposed in the binder layer of the beaded lens sheeting at 0.5 to 25 weight percent.

10. The retroreflective sheeting of claim 9,wherein the encapsulated lens sheeting includes a layer of a pressure sensitive adhesive to secure the encapsulated lens sheeting to a substrate, the phenolic resin being disposed in the layer of pressure sensitive adhesive at 5 to 20 weight percent.

11. The retroreflective sheeting of claims 1-10, wherein the sheeting is capable of demonstrating at least an 80 percent retained retroreflectance after 48 months when tested in accordance with ASTM E 810-91.

## Patentansprüche

1. Retroreflektierendes Bahnmaterial (10) mit eingekapselten Linsen umfassend: einen retroreflektierenden Bestandteil (12), welcher optische Elemente (14) und eine reflektierende Schicht (16), die elementares Aluminium enthält, einschließt, wobei die reflektierende Schicht (16), die elementares Aluminium enthält, hinter den optischen Elementen (14) angeordnet ist; **dadurch gekennzeichnet, dass** das Bahnmaterial auch ein Phenolharz umfasst, das mit dem elementaren Aluminium in Wechselwirkung steht, um dessen Oxidation zu verhindern, wobei das Phenolharz eine Gesamthydroxylzahl von mindestens 90 aufweist, wobei "Gesamthydroxylzahl" für die Summe aus der Hydroxylzahl und der Säurezahl steht, die respektive in Übereinstimmung mit zwei standardisierten Prüfmethoden entsprechend bestimmt werden, wobei die erste Prüfinethode die Hydroxylzahl gemäß der Test-Methode von ASTM E 222-88 und die zweite Prüfinethode die Säurezahl gemäß dem potentiometrischen Verfahren von ASTM D 465-92 bestimmt, mit der Maßgabe, dass, wenn das retroreflektierende Bahnmaterial (10) eine Klebstoffschicht (20) zur Befestigung des Bahnmaterials auf einem Substrat besitzt, das Phenolharz in einer Menge von weniger als 25 Gewichtsprozent in der Klebstoffschicht (20) enthalten ist.

2. Retroreflektierendes Bahnmaterial nach Anspruch 1, weiterhin umfassend eine Schicht eines Haftklebstoffes zur Befestigung des retroreflektierenden Bahnmaterials auf einem Substrat, wobei der Haftklebstoff 0,5 bis 25 Gewichtsprozent des Phenolharzes enthält.

3. Retroreflektierendes Bahnmaterial nach Anspruch 2, wobei der Haftklebstoff im wesentlichen aus 1) Acrylestern von nicht-tertiären Alkylalkoholen mit 1 bis 14 Kohlenstoffatomen und 2) mindestens einem Monomer, das mit dem Acrylsäureester copolymerisierbar ist und das aus Acrylsäure, Methacrylsäure, Itaconsäure, Acrylamid, Methacrylamid, Acrylnitril, und Methacrylnitril ausgewählt ist, besteht.

4. Retroreflektierendes Bahnmaterial nach Anspruch 1 - 3, wobei das Phenolharz die Reaktionsprodukte eines Aldehyds und eines Phenols beinhaltet.

5. Retroreflektierendes Bahnmaterial nach Anspruch 4, wobei der Aldehyd aus Formaldehyd, Acetaldehyd, Anisaldehyd, Zimtaldehyd, Furfural, Propionaldehyd, Oxalaldehyd und Salicylaldehyd und Kombinationen daraus, und das Phenol aus Phenol, p-tert-Butylphenol, p-tert-Octylphenol, p-Nonylphenol, Methylphenol, 1,3-Benzoldiol, 4,4'-Isopropylidendiphenyl und 2,3-Dimethylphenol und Kombinationen daraus ausgewählt ist.

6. Retroreflektierendes Bahnmaterial nach Anspruch 1 - 5, wobei das Phenolharz das Reaktionsprodukt aus Formaldehyd sowie einer oder mehrerer der folgenden Verbindungen ist: Phenol, p-tert-Butylphenol, p-tert-Octylphenol, p-Nonylphenol und 1,3-Benzoldiol.

7. Retroreflektierendes Bahnmaterial nach Anspruch 1 - 6, wobei das Phenolharz eine Gesamthydroxylzahl von 90 bis 1100 aufweist.

8. Retroreflektierendes Bahnmaterial nach Anspruch 1 - 7, wobei das Phenolharz eine Gesamthydroxylzahl von 100 bis 500 aufweist.

9. Retroreflektierendes Bahnmaterial nach Anspruch 1 - 8, wobei es sich bei dem retroreflektierenden Bahnmaterial um ein Bahnmaterial mit kugelförmigen Linsen handelt, und das Phenolharz in der Bindemittelschicht des Bahnmaterials mit kugelförmigen Linsen in einer Menge von 0,5 bis 25 Gewichtsprozent angeordnet ist.

10. Retroreflektierendes Bahnmaterial nach Anspruch 9, wobei das Bahnmaterial mit den eingekapselten Linsen eine Schicht eines Haftklebstoffes umfasst, um das Bahnmaterial mit den eingekapselten Linsen auf einem Substrat zu befestigen, wobei Phenolharz in der Schicht aus Haftklebstoff in einer Menge von 5 bis 20 Gewichtsprozent angeordnet ist.

11. Retroreflektierendes Bahnmaterial nach Anspruch 1 - 10, wobei das Bahnmaterial nach 48 Monaten in der Lage ist, mindestens 80 Prozent der ursprünglichen retroreflektierenden Eigenschaften aufzuzeigen, wenn es gemäß ASTM 810-91 geprüft wird.

## Revendications

1. Revêtement rétroréfléchissant à lentilles encapsulées (10) qui comprend :
un constituant rétroréfléchissant (12) qui comprend des éléments optiques (14) et une couche réfléchissante (16) qui contient de l'aluminium élémentaire, la couche réfléchissante (16) qui contient de l'aluminium élémentaire étant déposée derrière les éléments optiques (14) ; **caractérisé en ce que** le revêtement comprend également une résine phénolique qui interagit avec l'aluminium élémentaire pour empêcher son oxydation, la résine phénolique ayant un indice d'hydroxyle total d'au moins 90, dans lequel « indice total d'hydroxyle » représente la somme de l'indice d'hydroxyle et de l'indice d'acide, qui sont respectivement déterminés conformément aux deux essais normalisés, le premier essai déterminant l'indice d'hydroxyle selon la Méthode d'Essai A de la norme ASTM E 222-88 et le second essai déterminant l'indice d'acide selon la méthode potentiométrique de la norme ASTM D 465-92 ; avec la condition que si le revêtement rétroréfléchissant (10) possède une couche adhésive (20) pour monter le revêtement sur un substrat, la résine phénolique soit incorporée dans la couche adhésive (20) à moins de 25 pour cent en poids.

2. Revêtement rétroréfléchissant selon la revendication 1, comprenant en outre une couche d'adhésif sensible à la pression pour monter le revêtement rétroréfléchissant sur un substrat, l'adhésif sensible à la pression contenant de 0,5 à 25 pour cent en poids de la résine phénolique.

3. Revêtement rétroréfléchissant selon la revendication 2, dans lequel l'adhésif sensible à la pression est constitué essentiellement (1) d'esters acryliques d'alcools non tertiaires ayant de 1 à 14 atomes de carbone, et (2) d'au moins un monomère copolymérisable avec l'ester d'acide acrylique et choisi entre l'acide acrylique, l'acide méthacrylique, l'acide itaconique, l'acrylamide, le méthacrylamide, l'acrylonitrile, et le méthacrylonitrile.

4. Revêtement rétroréfléchissant selon les revendications 1 à 3, dans lequel la résine phénolique comprend les produits de réaction d'un aldéhyde et d'un phénol.

5. Revêtement rétroréfléchissant selon la revendication 4, dans lequel l'aldéhyde est choisi parmi le formaldéhyde, l'acétaldéhyde, l'anisaldéhyde, le cinnamaldéhyde, le furaldéhyde, le propionaldéhyde, l'oxalaldéhyde et le salicilaldéhyde et leurs combinaisons, et le phénol est choisi parmi le phénol, le p-tert.-butylphénol, le p-tert.-octylphénol, le p-nonylphénol, le méthylphénol, le 1,3-benzènediol, le 4,4'-isopropylidènediphényle, et le 2,3-xylénol, et leurs combinaisons.

6. Revêtement rétroréfléchissant selon les revendications 1-5, dans lequel la résine phénolique est le produit de réaction de formaldéhyde et d'un ou plusieurs des composés suivants : phénol, p-tert.-butylphénol, p-tert.-octylphénol, p-nonylphénol et 1,3-benzènediol.

7. Revêtement rétroréfléchissant selon les revendications 1-6, dans lequel la résine phénolique a un indice total d'hydroxyle de 90 à 1100.

8. Revêtement rétroréfléchissant selon les revendications 1-7, dans lequel la résine phénolique a un indice total d'hydroxyle de 100 à 500.

9. Revêtement rétroréfléchissant selon les revendications 1-8, dans lequel le revêtement rétroréfléchissant est un revêtement à lentilles en perles, et la résine phénolique est disposée dans la couche de liant du revêtement à lentilles en perles à entre 0,5 et 25 pour cent en poids.

10. Revêtement rétroréfléchissant selon la revendication 9, dans lequel le revêtement à lentilles encapsulées comprend une couche d'un adhésif sensible à la pression pour fixer le revêtement rétroréfléchissant encapsulé à un substrat, la résine phénolique étant disposée dans la couche d'adhésif sensible à la pression à entre 5 et 20 pour cent en poids.

11. Revêtement rétroréfléchissant selon les revendications 1-10, dans lequel le revêtement est capable de démontrer au moins 80 pour cent de pouvoir rétroréfléchissant conservé après 48 mois lorsqu'il est mis en essai selon la norme ASTM E 810-91.
